# EUROPEAN PATENT APPLICATION

(11) **EP 2 690 845 A1**
(43) Date of publication of application: **29.01.2014**
(21) Application number: 13177689.0
(22) Date of filing: 23.07.2013
(51) Int. Cl.: H04M 1/2745, G06F 3/01

(54) **Method and apparatus for initiating a call in an electronic device**

(30) Priority: 23.07.2012 KR 20120079840
(71) Applicant: Samsung Electronics Co., Ltd, Gyeonggi-do 443-742 (KR)
(72) Inventor: Kang, Jiyoung, 443-742 Gyeonggi-do (KR); Kim, Kyunghwa, 443-742 Gyeonggi-do (KR); Shin, Dongjun, 443-742 Gyeonggi-do (KR)
(74) Representative: Birchenough, Lewis

(57) **Abstract**

A method of connecting a call in an electronic device and corresponding apparatus. The method comprising the steps of automatically sending a signal for performing a call to a user of a selected contact object by the gesture of moving the electronic device to an ear. The method of connecting a call in the electronic device, includes: displaying a community service picture including at least one contact object; receiving an input where the contact object is selected in a state where the community service picture is displayed; receiving an input where a status of the electronic device is changed into a state where the contact object is selected; acquiring contact point information corresponding to the selected contact object when the contact object is selected and status change of the electronic device is detected; and automatically connecting a call using the acquired contact point information.

## Description

### BACKGROUND OF THE INVENTION

### 1. Field of the Invention

The present invention relates generally to an electronic device and method for supporting a call service, and more particularly, although not exclusively, to an electronic device capable of initiating a call using a gesture (e.g. simple gesture) of a user, and a method of operating the same.

### 2. Description of the Related Art

With the development of digital technology, various types of electronic device have been developed, for example mobile communication terminals, Personal Digital Assistants (PDAs), electronic notebooks, smart phones, and tablet Personal Computers (PCs). These types of devices are typically capable of both performing a communication function and processing personal information while a user is moving. Certain electronic devices have developed to a convergence stage where a single device includes various functionality traditionally provided by separate devices. An electronic device may provide various functions for example performing an audio, image or video call, transmission of a message for example Short Message Service (SMS)/Multimedia Message Service (MMS), creating an electronic note, shooting or capturing an image, transmitting or receiving an e-mail, broadcast playback, moving image playback, Internet access, an electronic commercial transaction, music playback, schedule management, a Social Networking Service (SNS), a friend finder service, a messenger service, and a dictionary function.

In particular, a first electronic device may perform audio communication with a second electronic device using an audio call function. In this case, when a calling party directly inputs a phone number of a party that the calling party wishes to call (i.e. a called party) in the first electronic device, or inputs a command (for example by actuating a call button) for requesting call connection after selecting a phone number from a phone book list, a signal for requesting call connection is transmitted to the second electronic device of the called party corresponding to the selected phone number. Further, the first electronic device of the calling party achieves call connection according to a response signal received from the second electronic device of the called party. In this manner, a user of a typical electronic device capable of a call function directly inputs a desired phone number for call connection, or searches and selects a phone number for call connection from a list (e.g. a call log, a phone book list, and/or a message list), and then actuates a call button for requesting signal transmission to the electronic device corresponding to the input phone number or the selected phone number.

However, the above-described call connection operation typically involves the user inconveniently actuating a call button after inputting or selecting a phone number. In particular, as the size of the call button is reduced due to the miniaturization of electronic devices, inconvenience in actuating the call button may be further increased. Furthermore, a call button may be erroneously actuated, contrary to the intention of the user. In this case, a call function may be initiated, contrary to the intention of the user.

Further, in the related art, with the introduction of smart phones, the number of users using a one-to-one (1:1) or one-to-many (1:n) (n is an integer greater than 1) chatting based SNS has rapidly increased. However, in conventional devices, it is not easy to connect a call with a called party in a 1:1 chatting environment, or another specific party in a 1:n chatting environment, while using the chatting based SNS. For example, in order for a first user A to connect a call with a second user B while the user A is chatting with the user B using an SNS, through the foregoing process, the user A is typically required to inconveniently search and select a phone number of the user B to connect a call by actuating a call button.

Further, in order for the user A to connect a call with the user B while the user A is chatting with the user B using the SNS, the user A typically selects a user identification item displayed in a chatting window to display a sub-menu pop-up window showing, for example, additional functions, for example 1:1 communication, a call function, or an audio memo function, and selects a call item (e.g., a call icon, or a phone number icon of a called party), for example by tapping the item, so that the call connection is initiated. According to the foregoing method, in a state that a separate pop-up window is displayed while using the SNS, a repeated input operation (e.g. tap) for selecting a call item among various menus of a pop-up window must be performed. In particular, an item corresponding to a function other than a call connection among various menus may be erroneously selected, causing inconvenience. Moreover, according to a method of the related art, when a phone number of a party that a calling party wishes to call is not stored in an electronic device, call connection during chatting is not supported, or is more difficult.

### SUMMARY OF THE INVENTION

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a method of initiating a call in an electronic device capable of automatically connecting a call according to a user gesture in the electronic device, and an apparatus thereof.

Certain embodiment of the present invention provide a method of initiating a call in an electronic device capable of automatically connecting a call according to a user gesture detected in a state in which a specific contact object is selected, and an apparatus thereof.

Certain embodiments of the present invention provide a method of initiating a call in an electronic device which automatically sends a signal for connecting the call to another electronic device, corresponding to a user of a selected contact object, according to a gesture that moves the electronic device, for example to an ear of the user of the electronic device in a state in which the user selects the contact object, and an apparatus thereof.

Certain embodiments of the present invention provide a method of initiating a call in an electronic device which automatically connects a call when a contact object is designated or selected, and a gesture of a user that moves the electronic device, for example to an ear of the user, is detected by a sensor mounted in the electronic device, while the electronic device provides or displays at least one contact object.

Certain embodiments of the present invention provide a method of initiating a call in an electronic device which automatically acquires contact point information of a designated or selected contact object, even when there is no contact point information with respect to a contact object designated or selected by a user stored in a device, and automatically connects a call using the acquired contact point information, and an apparatus thereof.

Certain embodiments of the present invention provide a method of initiating a call in an electronic device capable of improving convenience for a user and usability of the electronic device by implementing an optimal environment for connecting a call according to the requirements of a user in the electronic device, and an apparatus thereof.

In accordance with an aspect of the present invention, there is provided a method of establishing communication (e.g. initiating a call) for an electronic device, the method comprising the steps of: displaying a user interface (e.g. a community service picture) including at least one contact object (e.g. an object corresponding to a contact); receiving an input for selecting a contact object; detecting a change in a state (e.g. a physical state) of the electronic device; acquiring contact point information (e.g. information for communicating with a contact) corresponding to the selected contact object when the contact object is selected and the state of the electronic device is changed; and establishing (e.g. automatically) communication (e.g. connecting a call) using the acquired contact point information.

In accordance with another aspect of the present invention, there is provided an electronic device for establishing communication (e.g. initiating a call), the electronic device comprising: a display unit for displaying a user interface (e.g. a community service picture) including at least one contact object (e.g. an object corresponding to a contact); an input unit for receiving an input for selecting a contact object; a sensor unit for detecting a change in a state (e.g. a physical state, for example a postural change) of the electronic device; and a controller for acquiring contact point information (e.g. information for communicating with a contact) corresponding to the selected contact object when the contact object is selected and the state of the electronic device is changed, and establishing (e.g. automatically) communication (e.g. connecting a call) using the acquired contact point information.

In accordance with another aspect of the present invention, there is provided a method of initiating a call for an electronic device, the method comprising the steps of: displaying a community service picture including at least one contact object; receiving an input where the contact object is selected in a state that the community service picture is displayed; receiving an input where a status of the electronic device is changed in a state that the contact object is selected; acquiring contact point information corresponding to the selected contact object when the contact object is selected and status change of the electronic device is detected; and automatically connecting a call using the acquired contact point information.

In accordance with another aspect of the present invention, there is provided a computer readable recording medium recording a program for executing, in a processor, a method according to any aspect or claim disclosed herein.

In accordance with another aspect of the present invention, there is provided an electronic device comprising: a display unit for displaying a community service picture and a relation picture when automatically connecting a call in the electronic device; a sensor unit for detecting a postural change in the electronic device; a memory storing at least one program; and a controller for acquiring contact point information corresponding to at least one contact object provided from the community service picture by executing the at least one program and controlling the automatic connection of the call using the acquired contact point information.

In accordance with another aspect of the present invention, there is provided a computer readable recording medium recording a program for displaying a community service picture including at least one contact object, internally or externally acquiring contact point information corresponding to a selected contact object when a change in state of the electronic device is detected while a selection of a contact object is maintained for at least a predetermined time, and automatically connecting a call using the acquired contact point information.

Another aspect of the present invention provides a computer program comprising instructions arranged, when executed, to implement a method, system and/or apparatus, in accordance with any aspect or claim disclosed herein. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other aspects, and features and advantages of certain embodiments and aspects of the present invention will be more apparent from the following detailed description in conjunction with the accompanying drawings, in which:
FIG. 1 is a block diagram schematically illustrating a configuration of an electronic device according to an exemplary embodiment of the present invention;
FIG. 2 is a flowchart illustrating a method of automatically connecting a call according to an exemplary embodiment of the present invention;
FIGS. 3 to 6 are views illustrating examples of an operation of automatically connecting a call using an electronic device according to an exemplary embodiment of the present invention;
FIGS. 7 to 13 are views illustrating examples of a community service picture in an electronic device to which an automatic call connection function is supported according to an exemplary embodiment of the present invention;
FIG. 14 is a flowchart illustrating a method of automatically connecting a call by acquiring contact point information in an electronic device according to an exemplary embodiment of the present invention;
FIG. 15 is a flowchart illustrating a method of automatically connecting a call based on a plurality of contact point information in an electronic device according to an exemplary embodiment of the present invention;
FIG. 16 is a flowchart illustrating a method of automatically connecting a call through a postural change in an electronic device according to an exemplary embodiment of the present invention;
FIG. 17 is a flowchart illustrating a method of automatically connecting a call according to a type of a communication service in an electronic device according to an exemplary embodiment of the present invention; and
FIG. 18 is a flowchart illustrating a method of automatically connecting a call through an Internet based call or a cellular call in an electronic device according to an exemplary embodiment of the present invention.

### DETAILED DESCRIPTION OF EXEMPLARY EMBODIMENTS OF THE INVENTION

Exemplary embodiments of the present invention will now be described in detail, with reference to the accompanying drawings. The following description of exemplary embodiments is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims.

The same or similar reference numerals may be used throughout the drawings to refer to the same or similar parts. Detailed descriptions of well-known functions and structures incorporated herein may be omitted for clarity and conciseness, and to avoid obscuring the subject matter of the present invention.

The present invention may be embodied in many different forms and should not be construed as limited to the exemplary embodiments set forth herein. In addition, terms described herein, which are defined with reference to the functions of the present invention, may be implemented differently depending on a user or operator's intention and practice. Therefore, the terms should be understood on the basis of the disclosure throughout the specification. The principles and features of the present invention may be employed in varied and numerous exemplary embodiments without departing from the scope of the invention.

Furthermore, although the drawings illustrate exemplary embodiments of the invention, the drawings are not necessarily to scale, and certain features may be exaggerated or omitted in order to more clearly illustrate and explain embodiments of the present invention.

Throughout the description and claims of this specification, the words "comprise", "include" and "contain" and variations of the words, for example "comprising" and "comprises", means "including but not limited to", and is not intended to (and does not) exclude other features, elements, components, integers, steps, processes, operations, characteristics, properties and/or groups thereof.

Throughout the description and claims of this specification, the singular forms "a," "an," and "the" include plural referents unless the context dictates otherwise. Thus, for example, reference to "an object" includes reference to one or more of such objects.

Features, elements, components, integers, steps, processes, operations, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Among the terms set forth herein, a terminal, a mobile device, a portable device, or an electronic device refers to any kind of device capable of processing data which is transmitted to or received from any external entity (e.g. another device or a network). The terminal, the mobile device, the portable device, or the electronic device may display one or more items (e.g. icons or menus) on a screen (e.g. as part of a Graphical User Interface) to which stored data and/or various executable functions are assigned or mapped. The terminal, the mobile device, the portable device, or the electronic device may be in the form of any suitable type of device, for example a computer, a notebook, a tablet PC, a mobile device, and the like.

Among the terms set forth herein, a screen refers to a display or other output device which visually displays information to a user. In certain embodiments, the screen may optionally be capable of receiving tactile inputs from a user using an input object, for example a stylus, a finger of the user, wherein the tactile inputs may be electronically processed. Certain embodiments may apply any other suitable technique for receiving a user input, for example for conveying a user selection from the user to output devices.

Among the terms set forth herein, an icon refers to a graphical element, for example a figure or a symbol, displayed on the screen of the device. For example, an icon allows a user to easily select a desired function or data (i.e. a function or data mapped or assigned to the icon). In particular, one or more icons may have a mapping or assignment relation with one or more functions being executable in the device or with one or more data items stored in the device, such that the icons may be used for executing functions or selecting data in the device. When a user selects a displayed icon, the device identifies a particular function or data associated with the selected icon (i.e. according to the mapping or assignment relation). Then the device executes the identified function or displays or processes the identified data.

Among the terms set forth herein, data refers to any kind of information processed by the device, including, for example, text (e.g. a message), audio, and/or images. The data may be received from or transmitted to any external entity, or may be information created within the device, for example when a specific function is executed by the device.

Among the terms set forth herein, content refers to a picture or image, a sound, information, data, and/or any other type of media.

Among the terms set forth herein, a picture refers to an image and/or an interface (e.g. a graphical user interface (GUI)) displayed on a screen or display unit of the device.

Among the terms set forth herein, a community service refers to a service for interconnecting a group of users, for example allowing the users to communicate, interact and/or exchange information (e.g. exchange messages and/or multimedia content). The community service may be provided, for example, by a network (e.g. the Internet). A group of users using the community service may form a community. For example, the community service may be in the form of a social networking service (SNS).

Certain embodiments of the present invention provide a method of automatically establishing communication (e.g. initiating a call) in an electronic device and an apparatus thereof. In particular, an exemplary embodiment of the present invention provides an automatic communication establishing function (e.g. call initiating function), for establishing communication (e.g. initiating a call) between a party (e.g. calling party) with a counter party (e.g. called party). The counter party may correspond to a selected object, for example in the form of a "contact object". A contact object may refer to an object associated with a contact or user. For example, a contact object may be in the form of a graphical object or item corresponding to a contact or user, for example an avatar of the contact, a displayed message (e.g. SMS or email message) received from the contact, displayed contact information (e.g. name, telephone number, email address etc.) of the contact, and/or content associated with the contact. The call may be initiated when a gesture, performed by a user for moving the electronic device (e.g. to an ear of the user), is detected after the user has designated or selected a desired object.

The object may be designated or selected for initiating a call connection in a case where at least one object is displayed, for example in a user interface (e.g. in the form of community service content). For example, the community service content may be provided in the form of an image or picture or an interface on a screen of the electronic device.

The electronic device may provide access to a community service through a network, for example the Internet. For example, the community service may be in the form of a social networking service (SNS).

In various exemplary embodiments, the community service may be in the form of (i) a chatting based community service, and the displayed community service content includes a chat message; (ii) a feed based community service, and the displayed community service content includes a new feed message from a feed (e.g. a news feed, wherein the new feed message is a new news story); (iii) a Social Networking Service (SNS) community service, and the displayed community service content includes an SNS profile or a posted message associated with an SNS profile; (iv) a web based community service, and the displayed community service content includes a web page; (v) a list based community service, and the displayed community service content includes a list item in a list; (vi) a mail based community service, and the displayed community service content includes a mail message; (vii) a photograph based community service, and the displayed community service content includes a photographic image; (viii) any other suitable type of service or operation involving a community of people, users and/or organizations, and the displayed community service content is any suitable type of content, data, information, and/or media accessible using the community service.

A contact may be associated with "contact point information" comprising information allowing interaction with the context (e.g. allowing the contact to be identified, located and/or contacted, allowing information exchange with the contact, and/or allowing communication with the contact). Even when contact point information about a contact corresponding to a content object designated or selected by the user is not stored in the user's device, certain exemplary embodiments of the present invention may automatically receive, obtain, get, and/or acquire contact point information corresponding to the contact object from an external source (e.g., a contact server). An automatic call initiation function may be provided based on the received contact point information, for example by automatically initiating, attempting, and/or establishing a call, a connection, or a communication path to the entity or related electronic device associated with the received contact point information.

In certain exemplary embodiments of the present invention, a contact object represents an object provided in a communication service picture, and may be provided , for example, in the form of contact information, for example a user name, a nickname, a phone number, a mail address, and a user image. The contact object may be associated with contact point information mapped to the contact information, for example stored in the electronic device, or contact point information mapped to the contact information stored in an external contact server.

Hereinafter, exemplary configurations of an electronic device embodying the present invention, and methods of controlling an operation of the same, will be described below with reference to the accompanying drawings. However, the skilled person will appreciate that the present invention is not limited to the exemplary configurations and methods describe below.

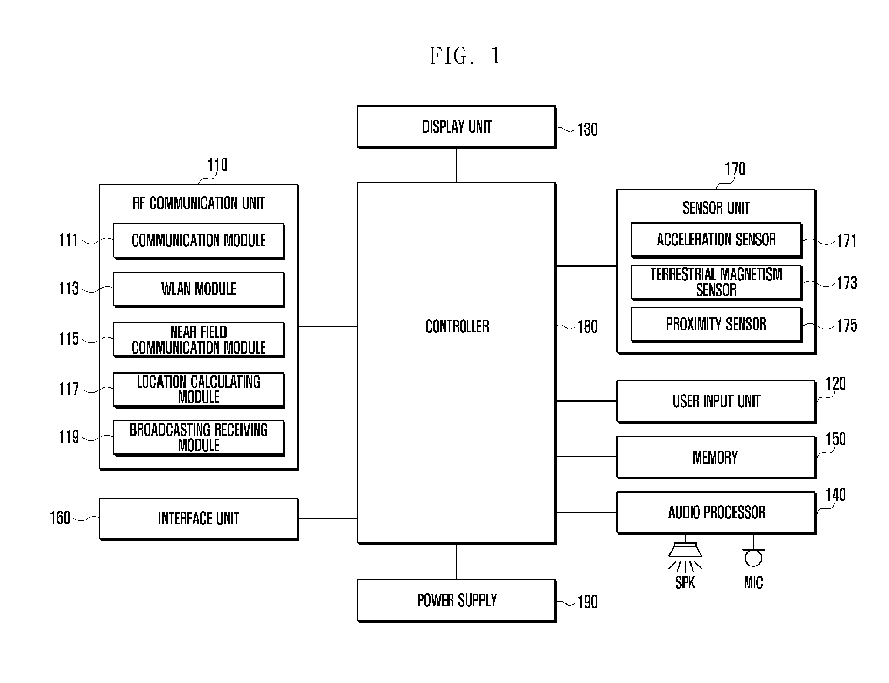

FIG. 1 is a block diagram schematically illustrating a configuration of the electronic device according to an exemplary embodiment of the present invention.

Referring to FIG. 1, the electronic device includes a radio frequency (RF) communication unit 110, a user input unit 120, a display unit 130, an audio processor 140, a memory 150, an interface unit 160, a sensor unit 170, a controller 180, and a power supply 190. The skilled person will appreciate that one or more constituent elements shown in FIG. 1 may not be essential or required in certain embodiments of the present invention, and that alternative embodiments may comprise an electronic device having greater or fewer constituent elements than shown in FIG. 1.

The RF communication unit 110 may include at least one module that enables wireless communication between the electronic device and a wireless communication system, and/or between the electronic device and a network in which other electronic devices are located. For example, the RF communication unit 110 may include a mobile communication module 111, a Wireless Local Area Network (WLAN) module 113, a short range or near field communication (NFC) module 115, a location calculating module 117, and a broadcasting receiving module 119.

The mobile communication module 111 is configured to transmit a wireless signal to, and receive a wireless signal from, an external entity, for example a base station, an external terminal, and a server. The wireless signal may include, for example, an audio call signal, an image call signal, or various types of data according to transmission and reception of characters, data, and multi-media. Further, the mobile communication module 111 may receive electronic mail transmitted through a network, and push information pushed through a service such as a Social Networking Service (SNS).

The WLAN module 113 connects with a wireless Internet connection and forms a wireless LAN link with other electronic devices, which may be mounted inside or outside the electronic device. A wireless LAN using, for example, WI-FI, a wireless technology for data exchange over a computer network, commercially available from the WI-FI ALLIANCE, a Wireless broadband (WiBro) service, a World Interoperability for Microwave Access (WiMax) service, and a High Speed Downlink Packet Access (HSDPA) service may be used as a wireless Internet technology. The WLAN module 113 performs communications associated with a function operation forming a WLAN link.

The short range or near field communication module 115 is a module for near field communication, for example based on any suitable short range communication technology, including, for example, NFC. BLUETOOTH (a short range wireless communications technology at the 2.4 GHz band, commercially available from the BLUETOOTH SPECIAL INTEREST GROUP, INC.), Radio Frequency Identification (RFID), Infrared Data Association (IrDA), Ultra Wideband (UWB), a specification for high level communication protocols complying with ZIGBEE (commercially available from the ZIGBEE ALLIANCE), and Near Field Communication (NFC).

The location calculating module 117 is a module for acquiring a location of the electronic device. For example, the location calculating module 117 includes a satellite positioning system module, for example Global Position System (GPS) module.

The location calculation module 117 may calculate distance information from at least three base stations and time information, and apply the calculated information to perform triangulation so that a three-dimensional current location information, for example according to latitude, longitude, and altitude, can be obtained. The location calculation module 117 may continuously receive a current location of the electronic device from at least three satellites in real-time to calculate location information. The location information of the electronic device may be acquired by various methods.

The broadcasting receiving module 119 receives a broadcast signal (e.g., a TV broadcasting signal, a radio broadcasting signal, a data broadcasting signal) and/or information associated with the broadcasting (e.g., a broadcasting channel, a broadcasting program or a broadcasting service provider) from an external broadcasting management server through a broadcasting channel (e.g., a satellite channel, or a terrestrial channel).

The user input unit 120 generates input data for controlling an operation of the electronic device. For example, the user input unit 120 may include one or more of a key pad, a dome switch, a touch pad (constant pressure/capacitive), a jog wheel, and a jog switch.

The display unit 130 displays (outputs) information processed by the electronic device. For example, when the electronic device is in a call mode, the display unit 130 may display a User Interface (UI) or a Graphical UI (GUI) associated with a call. Further, when the electronic device is in an image call mode or a shooting mode, the display unit 130 may display a shot and/or received image, a UI, or a GUI. In particular, the display unit 130 may display a community service picture corresponding to a selection of the user, and may display a UI or a GUI associated with call connection, and control with respect to the call connection, during a method of executing an automatic call connection mode according to a gesture of the user. An example of a picture of the display unit 130 operated by an embodiment of the present invention will be described later.

The display unit 130 may include any suitable type of display, for example a liquid crystal display (LCD), a thin film transistor-liquid crystal display (TFT LCD), an organic light-emitting diode (OLED), an Active Matrix OLED (AMOLED), a flexible display, and a 3D display. Some of the foregoing displays may be implemented, for example, in the form of a transparent display comprising a transparent type of display or an optical transparent type of display.

According to certain embodiments of the present invention, the display unit 130 may be combined with a touch panel for detecting a touch operation to form a mutual layered structure (hereinafter referred to as a "touch screen"), such that the display unit 130 may be used as an input device in addition to an output device. In this case, the display unit 130 may be provided in addition to, or instead of, the user input unit 120.

The touch panel may convert a variation in pressure applied to a specific region of the display unit 130 or a variation in capacitance generated at a specific region of the display unit 130 into an electric input signal. The touch panel may detect pressure when touched as well as a touched location and an area. When there is a touch input with respect to the touch panel, a corresponding signal is sent to a touch controller. The touch controller processes the corresponding signal and transmits corresponding data to the controller 180. Accordingly, the controller 180 may recognize which region of the display unit 130 is touched.

The audio processor 140 transmits an audio signal received from the controller 180 to a speaker SPK, and transfers an audio signal, for example a voice, received from the microphone MIC to the controller 180. The audio processor 140 converts voice/sound data into an audible sound through the speaker SPK and outputs the audible sound under control of the controller 180.The audio processor 140 may convert an audio signal such as a voice received from the microphone MIC into a digital signal and may transfer the digital signal to the controller 180 under the control of the controller 180.

The speaker SPK may output audio data received from the RF communication unit 110 or stored in the memory 150 in a call mode, a record mode, an audio recognition mode, and a broadcasting receiving mode. The speaker SPK may output a sound signal associated with functions (e.g., reception of a call connection, sending the call connection, reception of a message, playback of a music file) performed by the electronic device.

The microphone MIC receives and processes an external sound signal as electric audio data in a call mode, a record mode, and an audio recognition mode. In a case of the call mode, the processed audio data may be converted into a format which may be transmitted to a mobile communication base station through the mobile communication module 111. A noise removal method known in the art for removing noise generated during a method of receiving an external sound signal in the microphone MIC may be used.

The memory 150 may store a program for processing and controlling the controller 180. The memory 150 may perform a function for temporarily storing input/output data (e.g., phone numbers (contact point information), messages, audio files, still images, electronic books, moving images, contact information). The memory 150 may store a usage frequency (e.g., a usage frequency of an application, a usage frequency of a phone number, a message, and multimedia, and a usage frequency of a community service), an importance value, and a priority value. The memory 150 may store data about a vibration and a sound having various patterns output when a touch is input on a touch screen.

The memory 150 may include any suitable type of storage medium, for example including a flash memory type, a hard disk type, a multimedia card micro type, a card type of a memory (for example, an SD or XD memory), Random Access Memory (RAM), Static Random Access Memory (SRAM), Read-Only Memory (ROM), Electrically Erasable Programmable Read-Only Memory (EEPROM), Programmable Read-Only Memory (PROM), Magnetic RAM (MRAM), a magnetic disc, and an optical disc. In certain embodiments, the electronic device may operate in association with a web storage system that performs a storage function, in addition, or as an alternative, to the memory 150.

The interface unit 160 serves as an interface to one or more external devices that may be connected to the electronic device. The interface unit 160 may receive data or power from an external device and transfer the received data or power to respective constituent elements inside the electronic device. The interface unit 160 makes it possible to transmit data stored or processed inside the electronic device to an external device. For example, the interface unit 160 may include a wired/wireless headset port, an external charger port, a wired/wireless data port, a memory card port, and a port connecting a device including an identification module, an audio input/output port, a video input/output port, and an earphone port.

The sensor unit 170 may detect at least one of various changes, for example a postural change (i.e. a change in posture or orientation of the device), an approach of an object to the device (for example according to an illumination change), and an acceleration change. The sensor unit 170 may transfer a corresponding electric signal to the controller 180. For example, the sensor 170 may detect a status change (e.g. a change in the physical state or configuration of the device, or a change in the physical relationship between the device and another object) achieved based on the electronic device, and generate and transfer a corresponding detection signal to the controller 180. In certain embodiments of the present invention, the sensor unit 170 may include one or more types of sensors, for example, an acceleration sensor 171, a terrestrial magnetism or geomagnetic sensor 173, and a proximity sensor 175. During driving or operation of the electronic device (or user setting base), power is supplied to at least one sensor of the sensor unit 170 under the control of the controller 180 so that the sensor unit 170 may detect a status change of the electronic device. According to an exemplary embodiment of the present invention, the sensor unit 170 may operate to continuously monitor status changes in the electronic device. In certain embodiments of the present invention, the sensor unit 170 may be driven, for example, according to a previously defined user setting, a start time point of an automatic call connection function of the present invention, or a manual operation of the user.

The sensor unit 170 may be implemented by integrating a plurality of sensors (e.g., the accelerometer sensor 171, the terrestrial magnetism or geomagnetic sensor 173, and the proximity sensor 175) within one chip. Alternatively, or additionally, one or more sensors may be implemented as separate chips. The sensor unit 170 may include at least one sensing device, among various types of sensing devices, capable of detecting a status change in the electronic device. For example, the sensor unit 170 may include at least one of various sensing devices, for example a gyro sensor, an illumination sensor, a pressure sensor, a noise sensor (e.g., microphone), a video sensor (e.g., camera module), and a timer.

The controller 180 controls an overall operation of the electronic device. For example, the controller 180 performs control and processing associated with an audio call, data communication, and an image call. The controller 180 may include a multi-media module for playing multi-media. The multi-media module may be implemented inside the controller 180 or may be implemented separately from the controller 180. In particular, the controller 180 may control an overall operation associated with a user gesture based call connection function.

For example, the controller 180 may execute a community service according to a user request to control display of a relation picture (e.g. indicating that connection of a call is attempted). In a state that at least one contact object is selected from the community service picture by a user input, when a user gesture is detected through the sensor unit 170, the controller 180 may control automatic signal transmission for connecting a call based on contact point information about the selected contact object.

Further, when the contact information about the selected contact object is not stored in the memory 150, the controller 180 may control a series of operations or processes for acquiring the contact point information about the selected contact object from an external source (e.g., a contact server). When acquiring contact point information from the external source, the controller 180 controls automatic sending of signals or data for connecting a call based on the acquired contact point information. After the contact point information has been acquired (e.g. when the call is terminated), the controller 180 may control a series of operations or processes for selectively storing the acquired contact point information in the memory 150.

In addition, the controller 180 may acquire contact point information corresponding to at least one contact object provided on the community service picture by executing at least one program stored in the memory 150, and may control connection of an automatic call using the acquired contact point information. The at least one program may include commands for executing an operation associated with performing the display of a community service picture including at least one contact object, reception of an input where the contact object is selected in a displayed state of the community service picture, reception of an input where a status of the electronic device is changed in a selected state of the contact object, acquisition of contact point information corresponding to the selected contact object when the contact object is selected and when a status change of the electronic device is detected, and connection of an automatic call using the acquired contact point.

Further, when there is a plurality of acquired pieces of contact point information, the controller 180 may determine or select contact point information according to a priority (e.g. a priority assigned to each piece of contact point information) to control execution of the automatic call connection. In addition, the controller 180 may control connection of an automatic image or video call or an automatic audio call corresponding to the status change of the electronic device. Moreover, the controller 180 may control execution of automatic call connection using Internet based call support of a community service executed when connection of the automatic call of the electronic device starts, a call method of a priority set in the Internet based call support, and an electric field situation.

A more detailed control operation of the controller 180 will be described in an example of an operation of the electronic device and a control method thereof with reference to following drawings.

The power supply 190 receives power from an external power source or an internal power source and supplies power to each constituent element to operate each constituent element, as needed, under control of the controller 180.

Various exemplary embodiments according to the present invention may be implemented with a non-transitory recording medium, which may be read by a computer or a similar device using software, hardware or a combination thereof. According to an exemplary hardware implementation, various exemplary embodiments of the present invention may be implemented using at least one of Application Specific Integrated Circuits (ASICs), digital signal processors (DSPs), digital signal processing devices (DSPDs), programmable logic devices (PLDs), field programmable gate arrays (FPGAs), processors, controllers, micro-controllers, microprocessors, and an electric unit for executing the functions. In some exemplary embodiments, various functions may be implemented by the controller 180. According to an exemplary software implementation, in various exemplary embodiments, one or more procedures, operations, processes, and/or functions described herein may be implemented by separate software modules executed by hardware. The software modules may perform at least one function and/or operation described herein.

Further, the electronic device illustrated in FIG. 1 may be provided as part of various types of devices, for example various information and communication devices, multi-media devices, and application devices thereof supporting functions of embodiments of the present invention, for example using an Application Processor (AP), a Graphic Processing Unit (GPU), and a Central Processing Unit (CPU). For example the electronic device may be provided in the form of a tablet Personal Computer (PC), a Smart Phone, a digital camera, a Portable Multimedia Player (PMP), a media player, a portable game terminal, a laptop computer, a Personal Digital Assistant (PDA), or a mobile communication terminals operating based on one or more communication protocol corresponding to various communication systems. A method of controlling functions in embodiments of the present invention may be applied to various display devices, for example a Digital Television (TV), a Digital Signage (DS), and/or a Large Format Display (LFD).

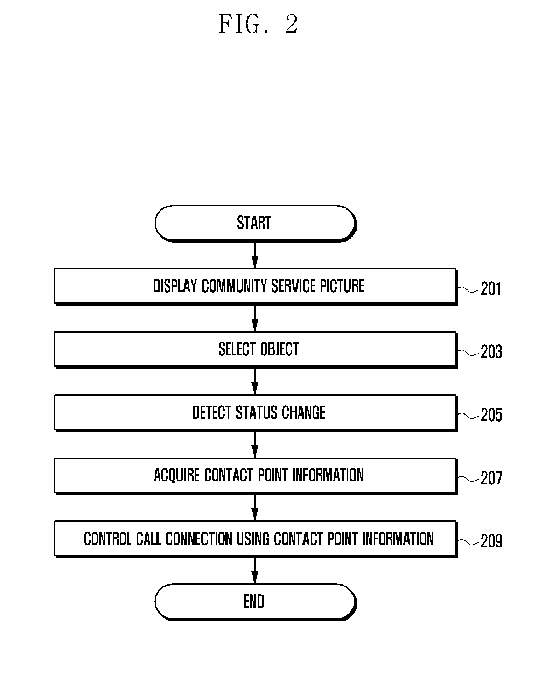

FIG. 2 is a flowchart illustrating a method of automatically connecting a call according to an exemplary embodiment of the present invention.

Referring to FIG. 2, a controller 180 may display community service content, which may comprise, for example, a picture corresponding to a user request in step 201. For example, as will be described later, the user may select one from various communication services, for example a chatting based community, a feed based community, an SNS based community (e.g., FACEBOOK, TWITTER, CYWORLD, KAKAO TALK), a web based community, a list based community (e.g., a message list, a call list), a photograph based community, and a mail based community. Accordingly, the controller 180 may execute a communication service according to a user selection and may control the display unit 130 to display a corresponding picture.

In step 203, the controller 180 may receive an input to select an object. The object may be, for example, a contact object associated with a contact. The object may be selected in a state in which the community service content or picture is displayed. For example, the user may select at least one contact object provided through the community service picture.

The controller 180 may detect a status change of the electronic device in a state in which the contact object is selected, that is, while the contact object is or has been selected, in step 205. For example, as described above, the controller 180 may determine that the status of the electronic device is changed when a user gesture is detected using the sensor unit 170 in a state that the contact object is selected from the community service picture by a user input.

When the contact object is selected and the status change of the electronic device is detected, the controller 180 may receive contact point information corresponding to the selected contact object in step 207, for example, the controller 180 may perform operations and steps for acquiring such contact point information. For example, the controller 180 may analyze the selected contact object to extract contact information (e.g., user name, nickname, phone number, mail address, user image) of the contact associated with the contact object. Further, the controller 180 may acquire the contact point information based on the extracted contact information. The contact point information may be acquired through a search of the memory 150, for example using the user name and/or nickname specified in the contact information. When a phone number is detected in the contact information, the detected phone number may be acquired as the contact point information. The controller 180 may acquire the contact point information with respect to the contact object using the memory 150 in cooperation with the external source(e.g., a contact server) when contact point information (e.g. a phone number) corresponding to the contact object is not detected in the contact information.

When the contact point information corresponding to the contact information is acquired, the controller 180 may control a call initiation to attempt or establish a connection using the received or acquired contact point information in step 209. The controller 180 may use the acquired contact point information to communicate with a receiving side and may automatically send a signal to establish and control a call connection with an electronic device of a counter party corresponding to the receiving side.

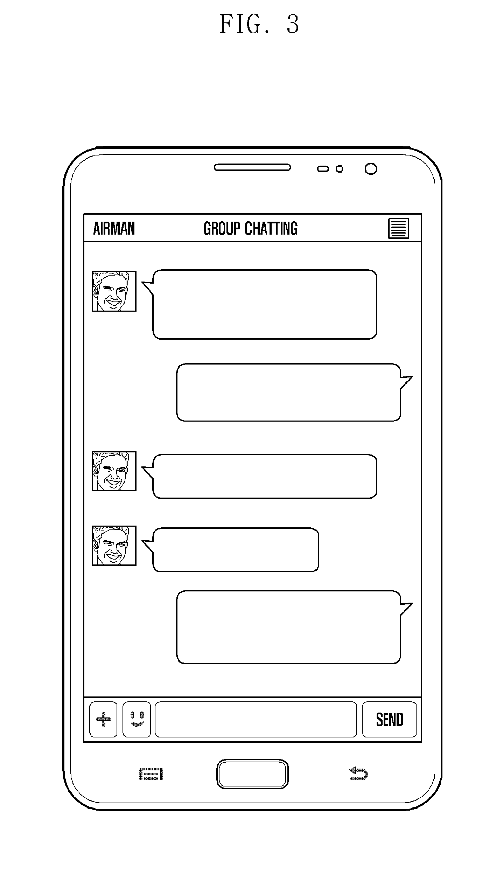

FIGS. 3 to 6 are views illustrating examples of an operation of automatically connecting a call connection using the electronic device according to an exemplary embodiment of the present invention.

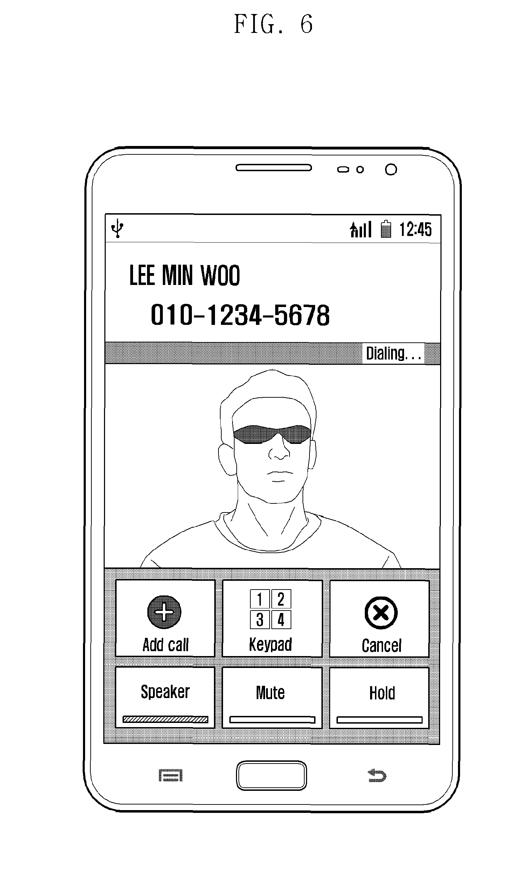

FIGS. 3 to 6 illustrate a state of a screen of an electronic device operating a chatting based community service. The chatting based community service may be one of various communication services. The chatting based community service is executed so that a corresponding community service picture is provided. Accordingly, certain exemplary embodiments of the present invention may operate even in a state in which various community services operate (for example a feed based community service, an SNS based community service, a web based community service, a risk based communication service, a photograph based community service, and a mail based community service, to be described later), corresponding to an operation using a chatting based community service in FIGS. 3 and 6.

Referring to FIGS. 3 to 6, FIG. 3 illustrates an example of a communication service picture displayed by the electronic device when the electronic device executes a chatting based communication service. For example, a first user and a second user execute a chatting based communication service (e.g., chatting application), and a picture of a chatting performance state between the first user and the second user may be provided using the executed community service.

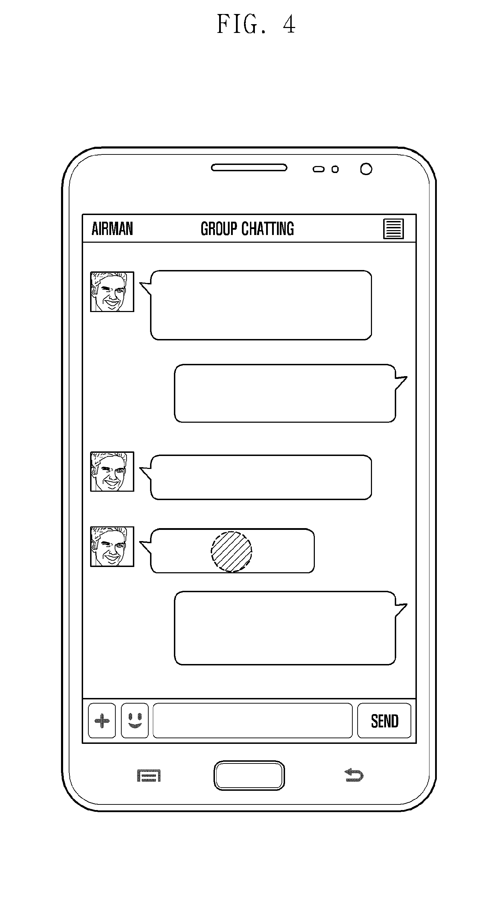

The user (e.g. first user) may input a selection event for selecting a specific contact object from the community service picture, as shown in FIG. 4 in a state that the community service picture is displayed. For example, as shown in FIG. 4, the user may touch a region, such as the region indicated by the shaded circle, on a contact object expressing a counter party (e.g. second user) of chatting on the community service picture, with the touching of the region being maintained in a touched state. Accordingly, when an event for selecting the contact object is input as illustrated above, in a state that the community service picture is provided, the controller 180 may wait for a gesture event input generated according to a user gesture.

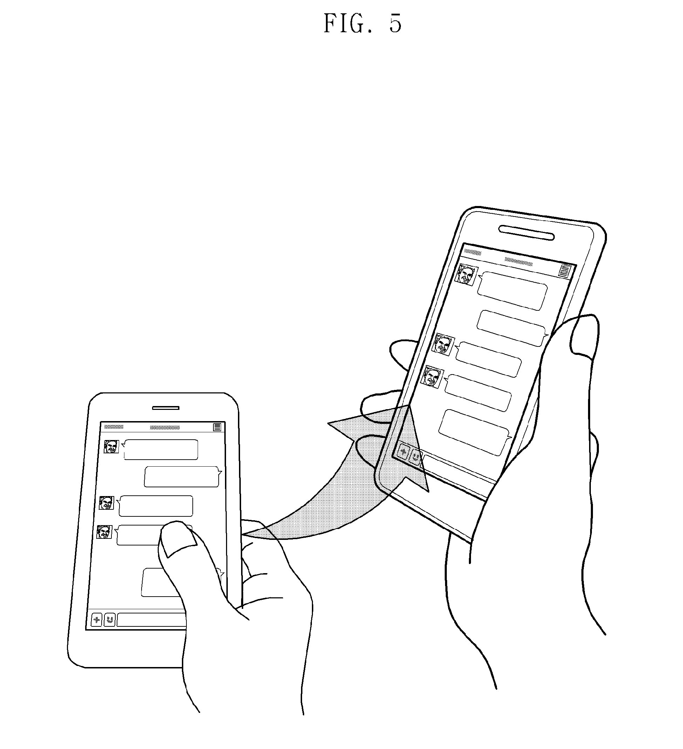

The user may then perform a gesture moving the electronic device, for example to an ear of the user as illustrated in FIG. 5, in a state that a contact object is selected in the communication service picture. FIG. 5 illustrates an example of a gesture operation, where the user has selected a contact object from a community service picture, to move the electronic device, for example to the user's ear.

As shown in FIG. 5, the user may input a selection event (e.g. a touch) for selecting a region of a contact object corresponding to automatic call connection from the community service picture, for example the touched region shown by the shaded circle in FIG. 4. Further, as shown in FIG. 5, the user may input a gesture event (e.g., an operation of moving the electronic device, for example to an ear of the user, or an operation of changing a posture of the electronic device) while maintaining the input (e.g. the touch) selecting the contact object from the community service picture, for example for at least a predetermined time. In this case, when a selection event is input through the communication service picture, as shown in FIG. 4, the electronic device activates the sensor unit 170 (e.g., the accelerometer 171, the terrestrial magnetism or geomagnetic sensor 173, and/or the proximity sensor 175) for measuring a change in state (e.g. posture) of the electronic device so that the sensor unit 170 may detect the input of the gesture event (e.g. according to the postural change) of the electronic device. For example, the sensor unit 170 (e.g., the accelerometer sensor 171) may measure an acceleration of the electronic device to generate an electric signal, and may transfer the electric signal to the controller 180. For example, when the accelerometer sensor 171 is a three axis accelerometer sensor, the accelerometer sensor 171 may detect the postural change in which the electronic device is inclined with respect to at least one of an X axis, a Y axis, and a Z axis.

Accordingly, in the example of FIG. 5, when the gesture event is detected through the sensor unit 170 in a state that the input of the selection event, shown in FIG. 4, is maintained through the community service picture, the electronic device may confirm a contact object corresponding to the selection event, and may acquire contact point information corresponding to the contact object.

In this case, as shown in FIG. 5, when the user performs a gesture for moving the electronic device to the user's ear, a touch input for selecting the contact object may be released, for example according to a gripping form of the electronic device. For example, according to certain exemplary embodiments of the present invention, when a selection event selecting the contact object from the community service picture is input, as shown in FIG. 4, and a gesture event according to a user gesture is input, as shown in FIG. 5, so that a sending function for the call connection starts, the controller 180 may continuously perform the sending function even if selection of the contact object is released (that is, input of the touch event is released). These embodiments may be advantageous in cases in which it may be difficult to continuously maintain an input selecting a contact object when a change in a gripping form tends to occur during a gesture operation of moving a user electronic device to an ear. Further, as the contact object may be released after the contact object is maintained for a predetermined time, a gripping form of the user may be freely supported. For example, the presence of continuous progress of the call connection by the user or an additional function (e.g., a speakerphone mode conversion function, or a mute function) may be easily controlled while a call connection process is in progress.

Further, if contact point information corresponding to the contact object is acquired, the electronic device may display a picture as illustrated in FIG. 6. For example, a community service picture of the electronic device illustrated in FIG. 5 may be converted to a new picture as illustrated in FIG. 6 according to input of the selection event and input of the gesture event.

As described above, if a user gesture input (gesture event input) is detected in FIG. 5 through the sensor unit 170 in a state that a contact object is selected from the community service picture by a user input (selection event input) in FIG. 4, the controller 180 displays a picture as illustrated in FIG. 6. The community service picture of the electronic device as illustrated in FIG. 4 may be converted into a sending picture for a call connection as illustrated in FIG. 6 using contact point information corresponding to the selected contact object. As shown in FIG. 6, the controller 180 may display a call sending picture based on contact point information corresponding to a contact object selected (e.g. touched) in a community service picture, as shown in FIG. 4, which may be executed before entering automatic call connection in FIG. 5. As shown in FIG. 6, the user may selectively control additional functions such as a termination of call progress, a speaker phone mode conversion, a mute function, and a hold function in a state that a call sending picture according to progress of the call connection is displayed.

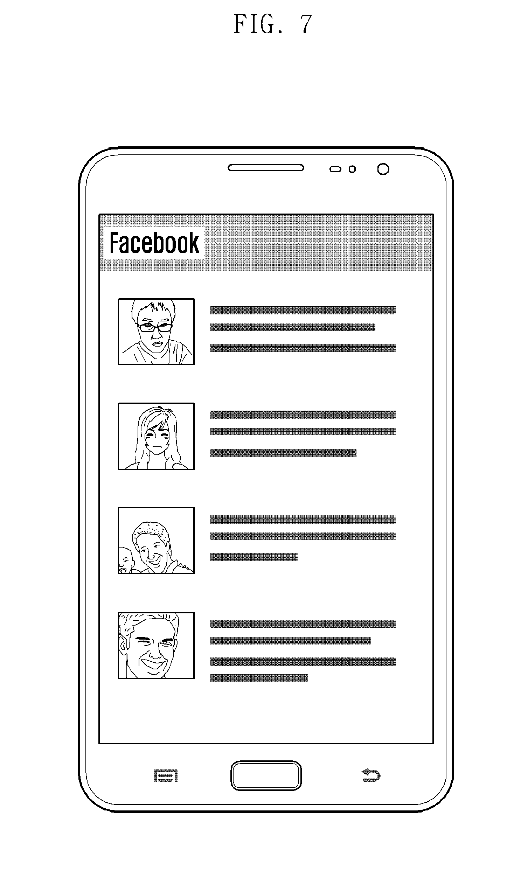

FIGS. 7 to 13 are views illustrating examples of a community service picture in an electronic device to which an automatic call connection function is supported according to an exemplary embodiment of the present invention.

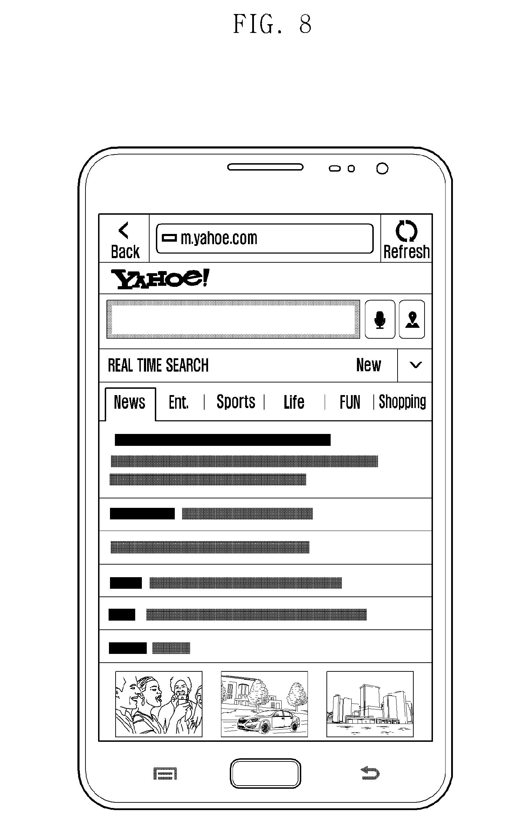

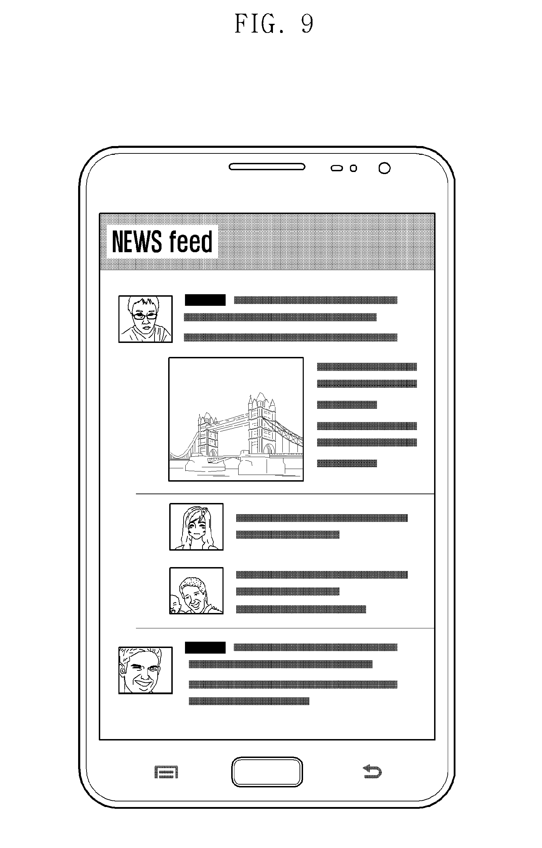

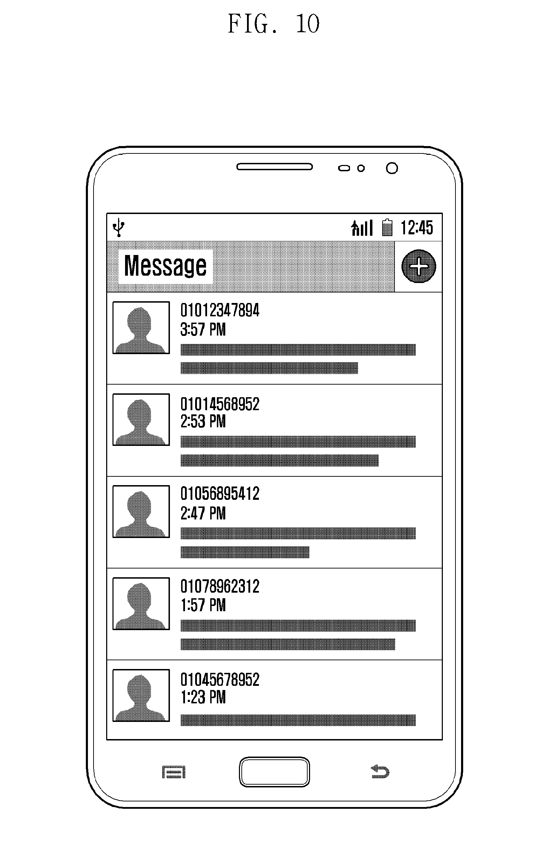

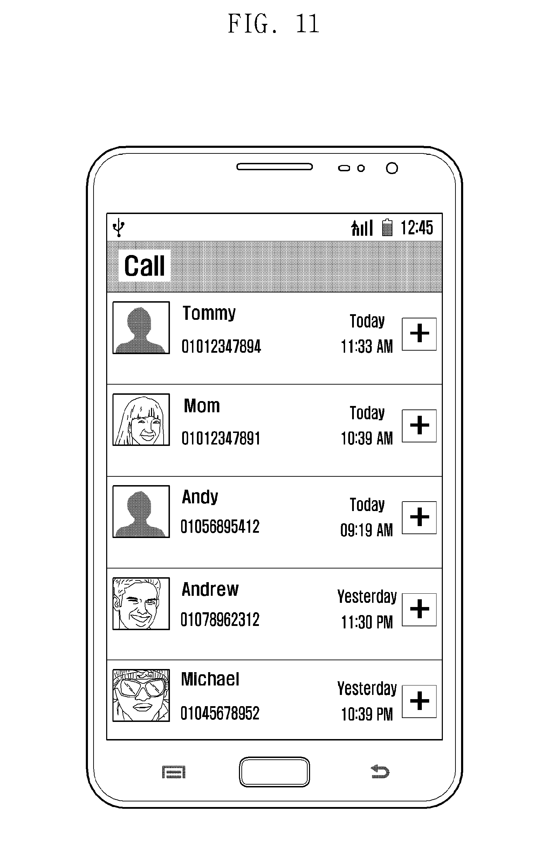

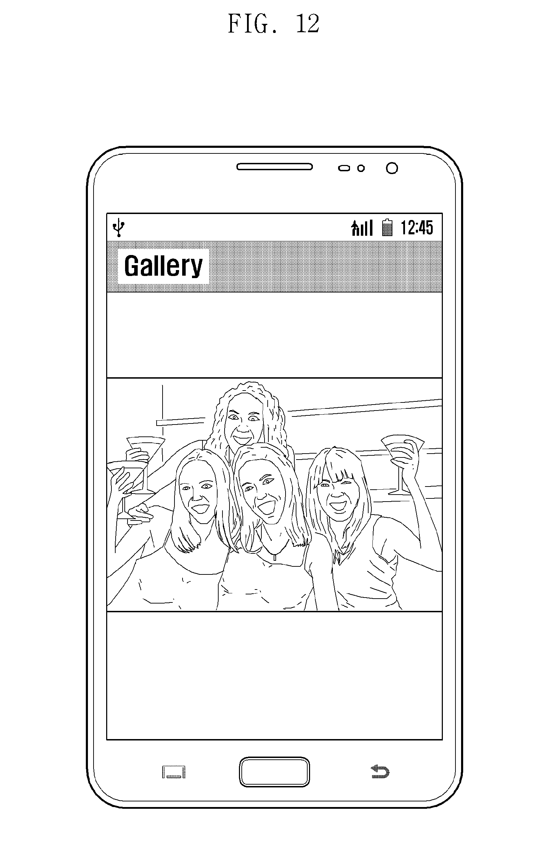

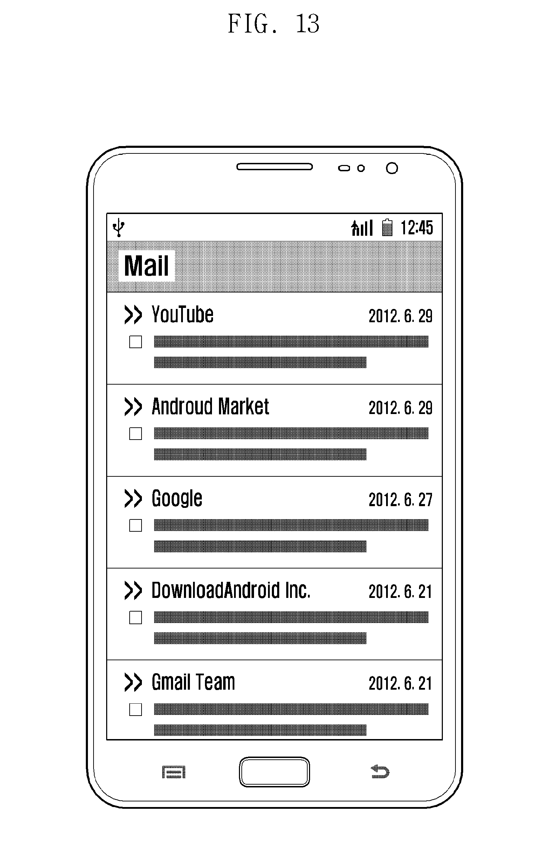

As shown in FIGS. 7 to 13, according to this exemplary embodiment of the present invention, an automatic call connection function may be supported by various communication services, for example an SNS based community (e.g., FACEBOOK) as shown in FIG. 7, a web based community (e.g., a web page, or new feed from any source, such as a feed of new messages from a friend, a stream of new RSS or TWITTER messages, or a news feed of stories from a news or reporting agency or organization) as shown in FIGS. 8 and 9, a list based community (e.g., a message list, a call list) as shown in FIGS. 10 and 11, a mail based community as shown in FIG. 13, and a photograph based community as shown in FIG. 12, as well as a chatting based community described with reference to FIGS. 3 to 6.

In a similar manner with regard to FIGS. 4-6, when the user touches a selected contact or portion of a picture of any of FIGS. 7-13 and then makes a gesture of the electronic device to move the electronic device, for example to the ear of the user, the electronic device may automatically send a signal for connecting a call to an electronic device of another user corresponding to the selected contact object. Thus the user may connect a call by only applying an input for designating or selecting a contact object corresponding to a call connection on an SNS based community service picture as in FIGS. 7-13, and then moving the electronic device to the ear of the user. Accordingly, in certain embodiments, when the contact object is designated or selected and a status change of the electronic device according to a user gesture, as shown in FIG. 5, is detected through the sensor unit 170 while the contact object is provided in the SNS based community service picture, as shown in any of FIGS. 7-13, the electronic device may internally or externally acquire contact point information of the contact point to automatically connect a call and show a new picture as shown in FIG. 6.

Further, similarly, as shown in FIGS. 8 to 11 and 13, an automatic call connection function may be supported according to a contact object and a user gesture selected from a web based community service picture, a list based communication service picture, and a mail based community service picture, respectively.

In addition, according to an exemplary embodiment of the present invention, the user may automatically send a signal for call connection to another user corresponding to a selected contact object by only (i) applying an input for designating or selecting a contact object (e.g., a face image) corresponding to call connection among contact objects, for example provided in the form of at least one user image (e.g., face image), displayed in a photograph based community service picture as illustrated in FIG. 12, and (ii) moving the electronic device, for example to an ear of the user as shown in FIG. 5. When a status change of the electronic device according to a user gesture is detected through the sensor unit 170 while the contact object is provided from a photograph based community service picture, the electronic device may internally or externally acquire contact point information of the contact object to automatically connect a call.

In the case of the photograph based community service shown in FIG. 12, the controller 180 may further perform a face recognition operation. For example, when the contact object is designated in FIG. 12 and a user gesture is detected through the sensor unit 170 in FIG. 5, the controller 180 may recognize a contact object of a region designated by the user, analyze a feature of a face using a face recognition method, with respect to a contact object of a corresponding region, and compare and search data (contact information created by each user) corresponding to the analyzed feature of the face from an internal source or an external source to acquire contact point information. Further, the controller 180 may control an automatic call connection process using the acquired contact information.

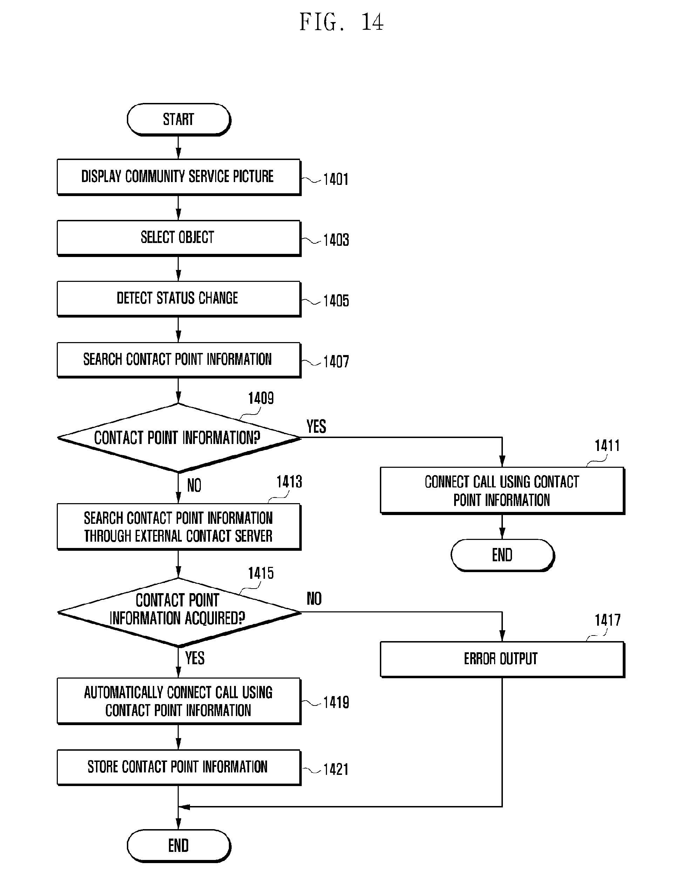

FIG. 14 is a flowchart illustrating a method of automatically connecting a call by acquiring contact point information in the electronic device according to an exemplary embodiment of the present invention.

In particular, FIG. 14 illustrates an example of an operation of automatically connecting a call by acquiring contact point information corresponding to the contact object through an external source (e.g., a contact server) when contact point information with respect to a contact object corresponding to user selection is not stored in the memory 150.

Referring to FIG. 14, a controller 180 may display a community service picture corresponding to a user request in step 1401. For example, the user may select execution of one community service from various community services as illustrated in FIGS. 3 to 13. Accordingly, the controller 180 may execute a community service according to a user selection and may control the display unit 130 to display a corresponding execution picture.

The controller 180 may receive an input for selecting a contact object in a state that a communication service picture is displayed, in step 1403. For example, the user may select at least one contact object provided through the communication service picture.

The controller 180 may detect a status change of the electronic device in a state that the contact object is selected in step 1405. For example, as described above, when a user gesture is detected through the sensor unit 170 in a state that a contact object is selected from the communication service picture, the controller 180 may determine that a status of the electronic device is changed.

When the contact object is selected in step 1403 and the status change of the electronic device is detected in step 1405, the controller 180 searches contact point information corresponding to the selected contact object in step 1407.The controller 180 may determine whether contact point information corresponding to the contact object is stored in the memory 150 in step 1409. For example, the controller 180 may analyze the selected contact object and extract contact information of the contact object (e.g., user name, nickname, phone number, mail address, user image). Further, the controller 180 searches the memory 150 based on the extracted contact information to determine whether contact point information corresponding to the contact information is included in the memory 150.

If the contact point information corresponding to the selected contact object is included in the memory 150 of the electronic device through the foregoing process (YES in step 1409), the controller 180 may automatically connect a call in step 1411, and the method of FIG. 14 then ends.

If the contact point information corresponding to the selected contact object is not included in the memory 150 of the electronic device through the foregoing process (NO in step 1409), the controller 180 may search contact point information corresponding to the contact object through an external contact server in step 1413. In this case, the controller 150 may cooperate (or connect) with the contact server through the RF communication unit 110. For example, the controller 150 may connect with the contact service through a mobile communication module 111 or a wireless LAN module 113, and request the contact server to search for the contact point information with respect to the contact information extracted from the contact object. Then, the contact server may search the contact point information with respect to the contact information from an internal database (DB) (e.g., contact information DB) and transmit the search result to the electronic device.

The controller 150 may determine whether the contact point information corresponding to the contact object is acquired from the contact service through the foregoing process in step 1415. For example, the controller 150 may determine whether the contact point information is acquired from a response of the contact server in response to a search request of the contact point information based on the contact information of the selected contact object.

When the contact point information is not acquired from the contact server (NO in step 1415), the controller 150 may control output of an error indicator in step 1417, for example displaying of an error message, and the method of FIG. 14 then ends. For example, the controller 150 may control output of error information reporting or indicating that the contact point information with respect to the selected contact information cannot be acquired. The error information may comprise feedback to the user, for example through a pop-up message output through a picture, and/or an audio output through the speaker SPK. A tactile feedback such as vibration may be provided together with visual and/or audible feedback, for example the pop-up message and voice audio.

Referring back to step 1415, when the contact point information is acquired from the contact server (YES instep 1415), the controller 180 may connect an automatic call using the acquired contact point information in step 1419.

The controller 180 may selectively store the contact point information from the contact server in the memory 150 when the automatic call is connected or a call according to the connection of the automatic call is terminated in step 1421. For example, the user may set the controller 180 to perform automatic storage, in the memory 150, of the contact point information acquired from the external source, for example in advance. Further, the user may set a method of storage by background processing upon connection of automatic call at a storage time point when automatically setting storage of the acquired contact point information storage by background processing at the call termination, and storage by a user selection at the call termination. In this case, the controller 150 may control storage of the acquired contact point information corresponding to the setting when the automatic call is connected based on the contact point information acquired from the external source. In this case, the controller 180 may store the acquired contact point information to which the contact information of the contact object, according to the user selection, is mapped. The method of FIG. 14 then ends.

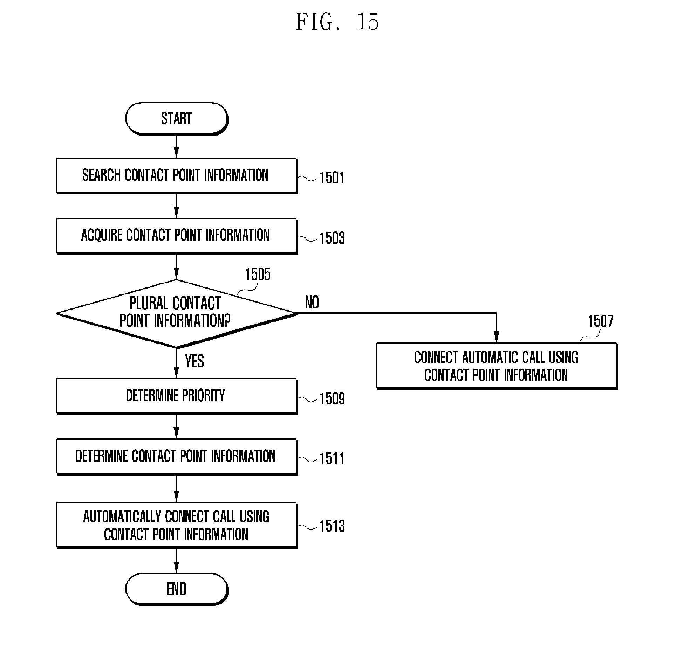

FIG. 15 is a flowchart illustrating a method of automatically connecting a call based on a plurality of contact point information in the electronic device according to an exemplary embodiment of the present invention.

In particular, FIG. 15 illustrates an example of an operation of determining one piece of contact point information, for example according to a preset method, when a plurality of pieces of contact point information is mapped to the contact object selected by the user from a community service picture, as shown in FIGS. 3-4 and 7-13, to automatically connect a call.

Referring to FIG. 15, the controller 180 may search contact point information with respect to the contact object selected from the community service picture by the user through the foregoing process in step 1501. The search of the contact point information may include a search in the memory 150 of the electronic device or a search in cooperation with an external contact server.

The controller 180 may acquire contact information according to search of the contact point information in step 1503, and may determine whether plural pieces of contact point information is acquired in step 1505.The contact point information may be acquired from the memory 150 of the electronic device or by cooperation with an external contact server.

When only a single piece of contact point information is acquired (NO instep 1505), the controller 180 may automatically connect a call using the acquired contact point information as illustrated above in step 1507, and the method of FIG. 15 ends.

However, in step 1505, when a plurality of pieces of contact point information is acquired (YES instep 1505), the controller 180 determines contact point information according priorities assigned to the pieces of contact point information among the plurality of acquired contact point information in step 1509. For example, the controller 180 may determine contact point information having the highest priority as contact point information for connecting the automatic call in step 1511. For example, when there are a plurality of pieces of contact point information corresponding to the contact object, the controller 180 may determine contact point information set as a representative number as contact point information of the highest priority. When a representative number is not set to a plurality of pieces of contact point information corresponding to the contact object, the controller 180 may determine an uppermost phone number in a list of phone numbers in the memory 150, or a numerically lowest phone number, as the contact point information of the highest priority. The controller 180 may determine a mobile communication phone number among a plurality of contact point information corresponding to the contact object as the contact point information of the highest priority. According to certain exemplary embodiment of the present invention, the priority of the contact point information may be defined according to a user setting. In this case, the controller 180 may determine a phone number according to the user setting as the contact point information of the highest priority.

When final contact point information for connecting the automatic call among a plurality of contact point information is determined, as described above, the controller 180 may automatically connect the call using the determined contact point information in step 1513, and the method of FIG. 15 then ends.

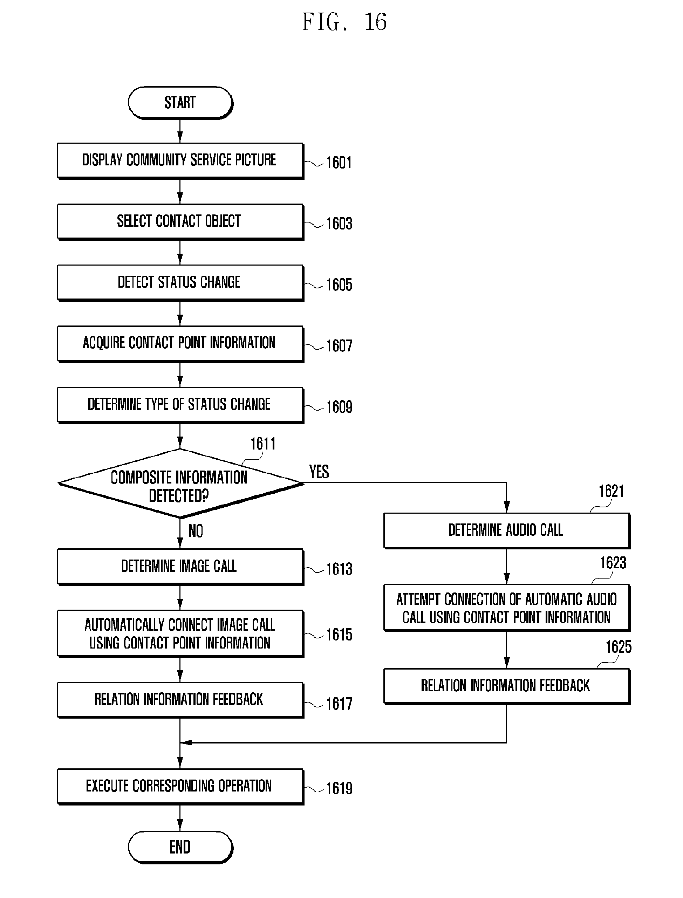

FIG. 16 is a flowchart illustrating a method of automatically connecting a call in an electronic device according to an exemplary embodiment of the present invention in more detail.

In particular, FIG. 16 illustrates an example of an operation of connecting an automatic audio call or an automatic image call, according to state information due to a state (e.g. posture) change detected through the sensor unit 170, upon automatically connecting a call as described above. That is, FIG. 16 illustrates an example of an operation which identifies a type of a detected state (e.g. posture) change of the electronic device (for example, identifies an operation where the user moves the electronic device to the user's ear, or an operation where the user views a front surface of the electronic device) when the state (e.g. postural) change of the electronic device, for automatically connecting the call, is detected, and selectively connects an automatic image call or an automatic audio call.

Referring to FIG. 16, a controller 180 may display a community service picture corresponding to a user request in step 1601, such as the pictures in FIGS. 3-4 and 7-13, and may receive an input for selecting a contact object in a state that the community service picture is displayed in step 1603.

The controller 180 may detect state (e.g. posture) change of the electronic device in a state in which the contact object is selected in step 1605. For example, as illustrated above, the controller 180 may determine that a status of the electronic device is changed when a user gesture is detected through the sensor unit 170 in a state that the contact object is selected from the community service picture by a user input, as shown in FIGS. 4-5.

When the contact object is selected and the status change of the electronic device is detected, the controller 180 may acquire contact point information corresponding to the selected contact object through the foregoing process in step 1607. For example, the controller 180 may acquire the contact point information from the memory 150 or in cooperation with an external contact server. The controller 180 determines a type of the status change of the electronic device (e.g., identifies an operation where a user moves the electronic device to the user's ear, or where the user views a front surface of the electronic device) in step 1609. The controller 180 may determine whether the status change of the electronic device is achieved by detection of composite information or detection of single information in step 1611. For example, the controller 180 may determine whether composite information obtained by a plurality of sensors of the sensor unit 170 is detected, or single information is obtained by a single sensor of the sensor unit 170, is detected according to the status change of the electronic device due to the user gesture. For example, the composite information may include both of first state information by the accelerometer sensor 171 or the terrestrial magnetism or geomagnetic sensor 173, and second state information by the proximity sensor 175. For example, the single information may include the first state information by the accelerometer sensor 171 or the terrestrial magnetism or geomagnetic sensor 173.

For example, when at least two items of state information or data (for example (i) location state information indicating that a location of the electronic device is changed through a sensor unit 170 according to the status change of the electronic device, and (ii) proximity state information indicating that illumination is changed, for example ambient light levels around the electronic device due to approach of a specific object (e.g., the user's body (for example face)) to the electronic device) is received by the controller 180, the controller 180 determines that composite information is detected. This case may correspond to an operation where the user moves the electronic device to the user's ear in a state that the contact object is designated or selected in the electronic device.

On the contrary, when a single piece of state information such as location state information, indicating that a location of the electronic device is changed through a sensor unit 170 according to the status change of the electronic device, is received by the controller 180, the controller 180 may determine that the single state information is detected. That is, this case may correspond to an operation where the user moves the electronic device to a location corresponding to a position in which the display unit 130 faces the eyes of the user to allow the user to view the display unit 130. When the status change of the electronic device is not achieved by detection of composite information (NO in step 1611), that is, the status change is achieved by detection of single information, the controller 180 may determine that the automatic call connection function is an image call function in step 1613. If the automatic image call connection is determined, the controller 180 may attempt connection of an automatic image call using the acquired contact point information in step 1615. Further, the controller 180 may provide relation information feedback according to the attempt to connect the automatic image call in step 1617, and may execute a corresponding operation in step 1619. For example, the controller 180 may control the display of a relation picture indicating that connection of the image call is attempted, and may perform an additional function (e.g., an image substitution, a termination of an attempting connection of the image call, a mute function) according to a user input on the relation picture. After step 1619 is performed, the method of FIG. 16 then ends.

Referring back to step 1611, when the status change of the electronic device is achieved by detection of composite information (YES instep 1611, the controller 180 may determine that the automatic call connection function is an audio call function in step 1621. If the connection of the automatic audio call is determined, the controller 180 may attempt connection of the automatic audio call using the acquired contact point information in step 1623. Next, the controller 180 may provide relation information feedback according to the attempt to connect the automatic audio call in step 1625, and may control execution of a corresponding operation in step 1619.For example, the controller 180 may control display of a relation picture indicating that connection of an audio call is attempted, and may perform additional functions (e.g., a speaker phone mode conversion function, a termination function of attempting an audio call, a mute function) on the relation picture according to a user input.

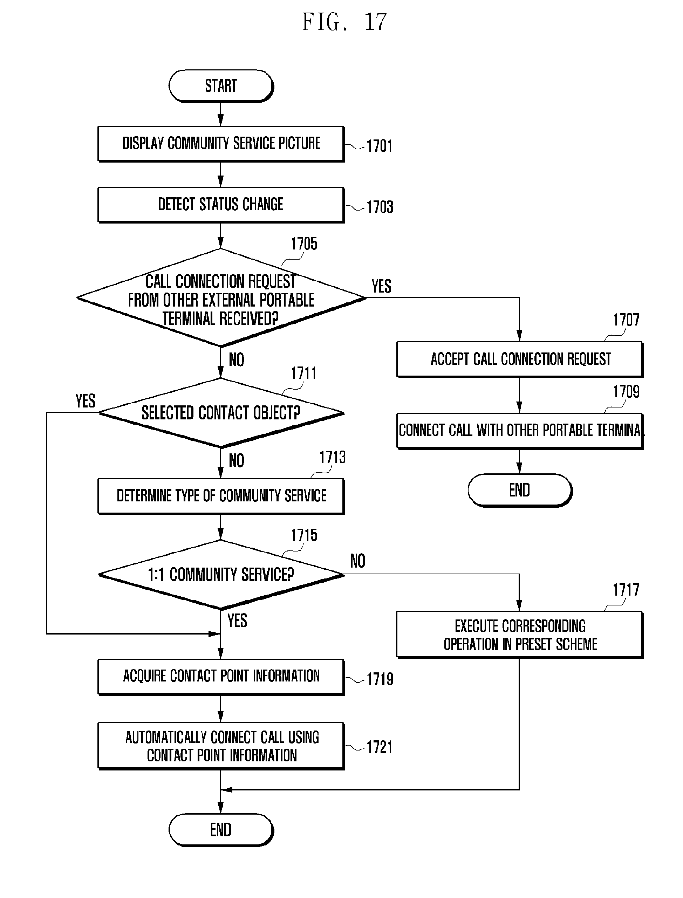

FIG. 17 is a flowchart illustrating a method of automatically connecting a call according to a type of a communication service in the electronic device according to an exemplary embodiment of the present invention.

In particular, FIG. 17 illustrates an example of an operation which determines whether a status change of the electronic device is an operation for accepting a call connection request from the external source in a state that a community service picture is provided, and connects an automatic call according to a community service (e.g., a 1:1 (e.g. one-to-one) community service, a 1:n (e.g. one-to-many) community service) when the status change of the electronic device is not the operation for accepting a call connection request.

Referring to FIG. 17, a controller 180 displays a community service picture corresponding to a user request in step 1701, such as the pictures shown in FIGS. 3-4 and 7-13, and may receive an input where a status of the first electronic device of a first user is changed in a state that the community service picture is displayed in step 1703.

When the status change of the first electronic device is detected in a state that the community service picture is displayed, as shown in FIGS. 3-4 and 7-13, the controller 180 may determine whether a call connection request is received from another external electronic device in step 1705. That is, the call connection request may correspond to a case where a user of the other external electronic device sends a signal for connecting a call to the first user of the first electronic device.

When the call connection request is received (YES in step 1705), the controller 180 accepts the call connection request according to the status change of the first electronic device in step 1707, and may connect a call with the other electronic device in step 1709. The method of FIG. 17 then ends. For example, when a call connection request is received from another user (device) while the first user of the first electronic device using a communication service as shown in FIGS. 3-4 and 7-13, the first user may perform a gesture for moving the first electronic device to the user's ear, as shown in FIG. 5. Accordingly, the controller 180 of the first terminal may automatically accept a call connection request received in response to the user gesture of the first user to start call connection.

Referring back to step 1705, when the call connection request is not received (NO in step 1705), the controller 180 may determine whether there is a contact object selected from the communication service picture in step 1711.

When the contact object is selected from the communication service picture (YES in step 1711), the controller 180 may proceed to step 1719 and control various operations described further below in steps 1719-1721. However, in step 1711, when there is no contact object selected from the communication service picture (NO in step 1711), the controller 180 determines a type of the community service in step 1713. The controller 180 may determine whether a currently executed community service is a 1:1 community service or a 1:n communication service in step 1715.

When the currently executed community service is a 1:n communication service (NO in step 1715), the controller 180 may control execution of a corresponding operation according to a preset method in step 1717, and the method of FIG. 17 then ends. For example, the controller 180 may acquire contact point information of a contact object serving as a subject generating the latest event among a plurality of contact objects indicating each counter party on a communication service picture corresponding to the preset method to attempt the call connection. The controller 180 may acquire respective contact point information corresponding to a plurality of contact objects in the preset method to attempt connection of a conference call. The controller 180 may guide selection of the contact object using displayed messages and prompt to a user for automatically connecting a call by reporting that a contact object is not selected according to the preset method. The controller 180 may disregard the status change of the electronic device corresponding to the preset method but may not perform a separate operation. The preset method may be defined according to a user setting with respect to an operation of an automatic call connection function.

Referring back to step 1715, when the executed community service is a 1:1 community service, the controller 180 acquires contact point information corresponding to a contact object provided from the contact service picture in step 1719, and may connect an automatic call using the acquired contact point information in step 1721.

If a plurality of pieces of contact objects are selected by the first user, for example, in FIG. 4 with multiple touch events and selections, the controller 180 may acquire respective contact point information corresponding to the selected contact objects, and may connect a conference call using the acquired contact point information.

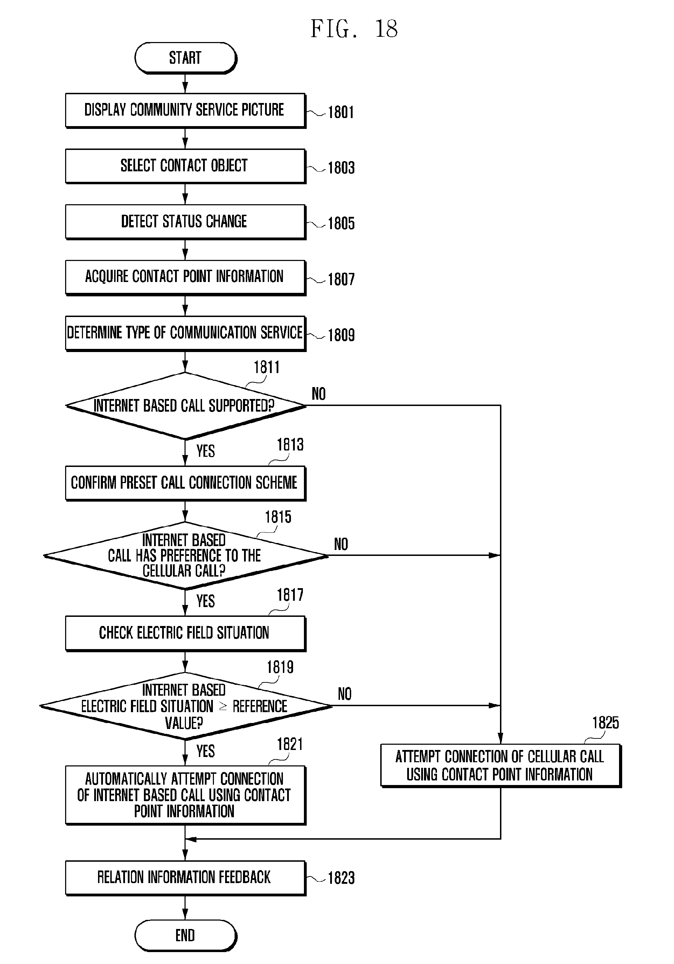

FIG. 18 is a flowchart illustrating a method of automatically connecting a call through an Internet based call or a cellular call in an electronic device according to an exemplary embodiment of the present invention.

In particular, FIG. 18 illustrates an example of an operation which automatically connects a call using an Internet based call of an executed community service upon the start of automatic call connection in the electronic device. The operation may use a call method based on a priority (Internet based call or cellular call preference) set upon support of the Internet based call, and an electric field situation. Accordingly, billing according to use of a mobile communication service may be reduced in a situation where the community service supports the Internet based call, and an electric field situation measuring signal strength for call communications, transmission, and receptions, according to a wireless LAN is excellent, such as high signal strength (e.g. high Signal-to-Noise ratio), for example, greater than a preset reference value. In addition, the call may be easily connected according to an electric field situation where the community service supports the Internet based call and an electric field situation according to a wireless LAN is bad, such as weak signal intensity, for example, less than a preset reference value.

Referring to FIG. 18, a controller 180 displays a community service picture, for example the pictures shown in FIGS. 3-4 and 7-13, corresponding to a user request in step 1801, and may receive an input when a contact object is selected in a state that the community service picture is displayed in step 1803.

The controller 180 may detect a status change of the electronic device in a state that the contact object is selected in step 1805. For example, when a user gesture is detected through the sensor unit 170 in a state that a contact object is selected from the communication service picture by a user input as illustrated above, the controller 180 may determine that a status of the electronic device has changed.

When the contact object is selected in step 1803 and the status change of the electronic device is detected in step 1805, the controller 180 may acquire contact point information corresponding to the selected contact object through the foregoing process as illustrated above in step 1807. For example, the controller 180 may acquire the contact point information from the memory 150 or in cooperation with an external contact server.

The controller 180 determines a type of the communication service in step 1809, and may determine whether the community service supports an Internet based call in step 1811. For example, when the community service is a chatting based community service, the controller 180 may support an Internet based call function from a corresponding community service. Meanwhile, when the community service is a web based community service, the controller 180 may not support a separate call function. Accordingly, the controller 180 may determine whether the Internet based call is possible by identifying a type of a currently executed community service.

When the community service does not support the Internet based call (NO instep 1811, the controller 180 may automatically attempt connection of a mobile communication based on a cellular call using the acquired contact point information in step 1825, and proceed to step 1823.

Referring back to step 1811, when the community service supports the Internet based call (YES instep 1811), the controller 180 may confirm a preset call connection scheme or method having a priority in step 1813, and may determine whether a preset call connection scheme or method having a priority (e.g. based on a priority) is an Internet call connection scheme or method or a cellular call connection scheme or method in step 1815. When the preset call connection scheme or method having a priority is the cellular call connection scheme or method (NO in step 1815), the controller 180 may automatically attempt connection of a mobile communication based cellular call using the acquired contact point information in step 1825, and proceed to step 1823.

Referring back to step 1815, when the preset call connection scheme or method having a priority is the Internet based call connection scheme or method (YES in step 1815), the controller 180 may check an Internet based electric field value, that is, electric field value due to received signal strength according to wireless LAN in step 1817, and determines whether the Internet based electric field value is equal to or greater than a preset reference value in step 1819.

When the Internet based electric field value is less than the preset reference value (NO in step 1819), the controller 180 may automatically attempt connection of a mobile communication based cellular call using the acquired contact point information in step 1825 and proceed to step 1823.

Referring back to step 1819 the Internet based electric field value is equal to or greater than the preset reference value (YES in step 1819), the controller 180 may automatically attempt connection of an Internet based call using the acquired contact point information in step 1821.

The controller 180 may provide relation information feedback according to attempting connection of the Internet based call or the mobile communication based cellular call in step 1823. The method of FIG. 18 then ends. For example, when attempting the connection of the Internet based call, the controller 180 may control display of a relation picture indicating that connection of the Internet based call is attempted through the display unit 130. When attempting the connection of the cellular call, the controller 180 may control display of a relation picture indicating that connection of the cellular call is attempted through the display unit 130. Further, the controller 180 may control display of a relation picture for controlling an additional function (e.g., a termination of attempting call connection, a mute function, a speaker phone mode conversion) as well as a picture with respect to each call connection method.

The foregoing exemplary embodiments of the present invention may be implemented in an executable program command form by various computer devices and components and may be recorded in a computer readable recording medium. In this case, the computer readable recording medium may include a program command, a data file, and a data structure individually or a combination thereof. The program command recorded in a recording medium may be specially designed or configured for the present invention or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated by at least one software module to perform an operation of the present invention.

As described above, according to exemplary methods of connecting a call in an electronic device and apparatus thereof, the user can designate at least one contact object while using various community services to attempt call connection by only a simple user gesture. According to the present invention, the user can attempt automatic call connection through a simple operation of moving the electronic device, for example to the user's ear in a state that a contact object of a counter party corresponding to the call connection is selected from contact objects provided through the community service picture. According to certain embodiments of the present invention, an electronic device can provide an intuitive method of connecting a call having high usability to a user by automatically connecting a call when a contact object corresponding to the call connection is designated and a gesture where a user moves the electronic device to an ear is detected by a sensor mounted in the electronic device while at least one contact object is provided.

According to certain embodiments of the present invention, while an electronic device provides a community service, a user may send a signal for automatically connecting a call with at least one counter party by only a simple gesture without repeated an input method, such as pressing a Call button. Further, according to certain embodiments of the present invention, an error of a wrong call connection is reduced so that accuracy of an automatic call connection function can be improved by connecting the automatic call according to a user gesture detected in a state that the contact object is designated.

Moreover, according to certain embodiments of the present invention, even when the contact point information with respect to the contact object selected from the community service picture is not stored in the memory, an automatic call can be connected. Certain embodiments of the present invention can automatically contact point information with respect to a contact object selected when there is no contact point information of a contact object according to user selection to connect the automatic call based on the acquired contact point information. Accordingly, the user can intuitively and conveniently send a call with respect to the contact object.

In addition, certain embodiments of the present invention can improve convenience, usability, and a competitive force of an electronic device by implementing optimal environments for connecting a call of a user of the electronic device. Certain embodiments of the present invention can simply be implemented by various types of electronic devices and various other devices corresponding thereto.

It will be appreciated that embodiments of the present invention can be realized in the form of hardware, software, or any combination of hardware and software. For example, the above-described apparatus and methods according to embodiments of the present invention can be implemented in hardware or firmware, or as software or computer code, or combinations thereof. Various components such as a controller, a central processing unit (CPU), a processor, and any unit or device described herein includes at least hardware and/or other physical structures and elements. In addition, the software or computer code can also be stored in a non-transitory recording medium such as a CD ROM, a RAM, a ROM whether erasable or rewritable or not, a floppy disk, CDs, DVDs, memory chips, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the embodiments described herein can be rendered in such software, computer code, software modules, software objects, instructions, applications, applets, apps, etc. that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include volatile and/or non-volatile storage and memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, the program may be electronically transferred through any medium, for example communication signals transmitted by wire/wireless connections, and any other suitable alternative. The programs and computer readable recording medium can also be distributed in network-coupled computer systems so that the computer readable code is stored and executed in a distributed fashion.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program.

Although exemplary embodiments of the present invention have been described in detail hereinabove, it should be clearly understood that many variations and modifications of these embodiments, which may appear to those skilled in the present art, will still fall within the scope of the present invention, as defined in the appended claims.

## Claims

1. A method of initiating a call in an electronic device, the method comprising:
displaying a community service content including at least one object of a community service;
receiving an input where the object is selected on the community service content;
detecting whether a status of the electronic device is changed while the object is selected;
receiving contact point information corresponding to the selected object in response to the object being selected and the status change of the electronic device being detected; and
automatically initiating the call using the received contact point information.

2. The method of claim 1, wherein the step of receiving the contact point information comprises receiving, from a source external to the electronic device, the contact point information corresponding to the object, when the contact point information is not stored or searched in the electronic device.

3. The method of claim 1 or 2, wherein the step of receiving the contact point information comprises:
searching the contact point information corresponding to the object from a memory inside of the electronic device;
receiving the contact point information corresponding to the object from the memory when the contact point information is included in the memory; and
receiving the contact point information corresponding to the object in cooperation with an external contact server, as the external source, when the contact point information is not included in the memory.

4. The method of claim 1, 2 or 3, wherein the step of automatically initiating the call comprises determining contact point information according to a priority to automatically initiate the call when a plurality of contact point information is received with respect to the selected object.

5. The method of any preceding claim, wherein the step of automatically initiating the call comprises:
determining whether a plurality of contact point information is received;
automatically initiating the call using a single received contact point information when the single contact point information is received;
determining a first contact point information having a highest priority among the plurality of contact point information when the plurality of contact point information is received;
determining final contact point information from the single contact point information or from the first contact point information for automatically initiating the call among the plurality of contact point information; and
automatically initiating the call using the determined final contact point information.

6. The method of claim 5, wherein the step of determining the final contact point information comprises determining one of a representative number, an uppermost phone number in a list of phone numbers, a mobile communication phone number, and a phone number according to a user setting as the final contact point information.

7. The method of any preceding claim, wherein the step of automatically initiating the call comprises automatically initiating an image call or an audio call according to the status change of the electronic device.

8. The method of claim 7, wherein the step of automatically initiating the call comprises:
receiving the contact point information;
determining whether the status change of the electronic device is status change according to composite information or status change according to a single information;
automatically initiating the image call using the received contact point information when the status change of the electronic device is the status change according to the single information; and
automatically initiating the audio call using the received contact point information when the status change of the electronic device is the status change according to the composite information.

9. The method of any preceding claim, wherein the step of automatically initiating the call comprises automatically initiating the call using an Internet based call of an executed communication service when the automatic initiation of the call in the electronic device starts, a call method having a priority set when the Internet based call is supported, and an electric field situation.

10. The method of claim 9, wherein the step of automatically initiating the call comprises:
determining whether a preset call connection method having a priority is an Internet based call connection method or a cellular call connection method when the community service supports the Internet based call; and
automatically initiating a mobile communication based cellular call using the received contact point information when the preset call connection method having a priority is the cellular call connection method.

11. The method of any preceding claim, further comprising:
detecting whether a status of the electronic device is changed with the community service content being displayed;
determining whether a call connection request is received from an external electronic device when the status change of the electronic device is detected;
accepting the call connection request according to the status change of the electronic device when the call connection request is received to connect a call with the external electronic device;
determining whether a currently executed community service is a one-to-one community service or a one-to-many community service when the call connection request is not received;
automatically initiating the call using the contact point information corresponding to the object provided from the community service content when the currently executed community service is the one-to-one community service; and
controlling execution of a corresponding operation in a preset method when the currently executed community service is the one-to-many community service.

12. The method of claim 11, further comprising:
determining the selection of the contact object from the community service content when the call connection request is not received;
automatically initiating the call using contact point information corresponding to the selected object in response to the object being selected from the community service content; and
determining whether the community service is the one-to-one community service or the one-to-many community service when there is no object selected from the community service content.

13. The method of claim 11 or 12, wherein the step of controlling the execution of the corresponding operation comprises controlling one of an automatic initiation of a call using contact point information of an object corresponding to the latest generated event among a plurality of objects provided from the community service content, initiation of a conference call using respective contact point information corresponding to the plurality of objects, and a guiding of the selection of the object by displaying messages for automatically initiating a call.

14. The method of any preceding claim, further comprising selectively storing contact point information received from a contact server in a memory.

15. The method of any preceding claim, wherein the community service comprises a chatting based community service, a feed based community service, a Social Networking Service (SNS) community service, a web based community service, a list based community service, a mail based community service, and a photograph based community service.

16. A electronic device comprising:
a display unit for displaying a community service content of a community service and displaying a relation content when automatically initiating a call in the electronic device;
a sensor unit for detecting a postural change in the electronic device;
a memory for storing at least one program; and
a controller for receiving contact point information corresponding to at least one object provided from the community service content by executing the at least one program and controlling the automatic initiation of the call using the received contact point information.

17. The electronic device of claim 16, wherein the at least one program comprises commands for executing the steps of:
displaying a community service content including at least one object;
receiving an input where the object is selected on the community service content;
detecting whether a status of the electronic device is changed while the object is selected;
receiving contact point information corresponding to the selected object in response to the object being selected and the status change of the electronic device being detected; and
automatically initiating the call using the received contact point information.

18. The electronic device of claim 16 or 17, wherein the controller is configured to receive, from a source external to the electronic device, the contact point information corresponding to the object when the contact point information is not searched in the memory, and determine contact point information according to a priority to automatically initiate the call when a plurality of contact point information is received with respect to the selected object.

19. The electronic device of claim 18, wherein the controller is configured to control automatically initiating of an image call or an audio call according to the status change of the electronic device, and control automatically initiating of the call using an Internet based call of an executed communication service when the automatic initiation of the call in the electronic device starts, a call method having a priority set when the Internet based call is supported, and an electric field situation.

20. A non-transitory computer readable recording medium in a computer, in which a program for executing a method is recorded thereon, the program when accessed by a processor causes the processor to execute the steps of:
displaying a community service content of a community service including at least one object;
internally or externally receiving contact point information corresponding to a selected object when a status change of an electronic device is detected while selection of the selected object is maintained on the community service content for a predetermined time; and
automatically initiating a call using the received contact point information.
